Europäisches Patentamt

(19) European Patent Office

Office européen des brevets

(11) Publication number: **0 438 286 A1**

(12) **EUROPEAN PATENT APPLICATION**

(21) Application number: 91300314.1

(22) Date of filing: 16.01.91

(51) Int. Cl.⁵: **C08C 19/28, C08L 77/00,** // (C08L77/00, 13:00)

(30) Priority: 16.01.90 GB 9000907

(43) Date of publication of application: 24.07.91 Bulletin 91/30

(84) Designated Contracting States: AT BE CH DE DK ES FR GB GR IT LI LU NL SE

(71) Applicant: BP Chemicals Limited Belgrave House 76 Buckingham Palace Road London, SW1W 0SU (GB)

(72) Inventor: Bonner, James Graham, BP Chemicals Limited PO Box 21, Bo'ness Road Grangemouth, Stirlingshire FK3 9XH (GB) Inventor: Gallacher, Karen, BP Chemicals Limited Belgrave House, 76, Buckingham Palace Road London SW1W 0SU (GB)

(74) Representative: Wilson, Michael John et al BP International Limited, Patents & Agreements Division, Chertsey Road Sunbury-on-Thames, Middlesex TW16 7LN (GB)

(54) Graft polymer and polyamide composition.

(57) A graft nitrile rubber contains up to 50% by weight of maleic anhydride grafted thereon, preferably free radical melt grafted. The grafted nitrile rubber may be mixed in amounts up to 50% by weight with a polyamide to form a composition of high impact strength especially at low temperatures.

EP 0 438 286 A1

# GRAFT POLYMER AND POLYAMIDE COMPOSITION

This invention relates to a graft polymer and and to a polyamide composition and their preparation.

US patent number US 4,803,247 claims a flexible, chlorofluorohydrocarbon permeation resistant composition comprising : from about 40 to 90 percent by weight of at least one polyamide, from about 5 to 40 percent by weight of at least one nitrile rubber, and from about 5 to 40 percent by weight of at least one reactive rubber comprising a copolymer of ethylene and an alpha-olefin having 3 to 8 carbons, said copolymer having an unsaturated reactive graft moiety reactive with the end groups of the polyamide.

US patent numbers US 4,478,978 and US 4,346,194 relate to polyamide moulding materials comprising a toughening polymer which is b(i) an elastomeric olefinic copolymer having carboxyl or carboxylate functionality or b(ii) an ionic copolymer of an alpha olefin and an unsaturated carboxylic acid which can contain a third copolymerizable monomer, in which the acid moiety is at least partially ionized with metal ions. Carboxyl or carboxylate functionality is said to be supplied by employing as a comonomer in the copolymer an ethylenically unsaturated comonomer containing carboxyl or carboxylate groups and with respect to a preferred component (b)(i), such functionality can be supplied by reacting ethylene/$C_3$-$C_8$ -olefin/unconjugated diene with an unsaturated compound taken from the class consisting of alpha beta ethylenically unsaturated dicarboxylic acids having from 4 to 8 carbon atoms or derivatives thereof. Such adducts are said to be preparable by any grafting process which intimately mixes the unsaturated acid or derivative with the polymer without appreciable generation of free radicals and which concurrently or subsequently heat the mixture to a temperature whereat thermal addition occurs. Among toughening polymers said to be representative are copolymers of butadiene/acrylonitrile with carboxyl end groups. The blends disclosed in these two patents are said to be prepared by admixing the ingredients in the indicated proportions and melt blending them for intimate admixture.

US 4,448,956 claims a method which comprises mixing together and copolymerizing to form a solid polyamide (a) a major amount of weight of the mixture of at least one lactam monomer and (b) a minor amount by weight of the mixture of at least one graft copolymer promoter having a Tg of from about -40° to -100°C and comprising (I) from about 4 to 13 parts by weight of maleic anhydride grafted on (II) 100 parts by weight of at least one liquid polymer having an average molecular weight of from about 1,000 to 30,000 and being selected from the group consisting of (A) homopolymers, copolymers and mixtures of the same of polymerizable conjugated dienes having from 4 to 6 carbon atoms and (B) copolymers of at least 50% by weight of at least one polymerizable conjugated diene having from 4 to 6 carbon atoms and essentially the balance of at least one copolymerizable monomer selected from the group consisting of at least one monovinyl aryl monomer having from 8 to 12 carbon atoms, acrylonitrile and methacrylonitrile and mixtures of the same in admixture with (c) an effective catalytic amount of an anionic lactam polymerization catalyst (lactamate salt), the cyclic lactam of (a) and (c) having the formula R'-R = (NHCO) where the R = NHCO group forms the lactam ring and R is an alkylene radical of from 5 to 11 carbon atoms and R' is hydrogen or an alkyl radical of from 1 to 4 carbon atoms.

US 4,448,956 discloses that grafting of maleic anhydride onto the substrate liquid polymer may be effected by using heat alone, for example, a temperature of from 140°C -300°C for from about 2 to 5 hours. However, lower temperatures may be employed with somewhat shorter times using free radical catalysts, eg about 2 to 4 hours at temperatures less than 100°C. Thermal grafting of maleic anhydride onto a liquid butadiene acrylonitrile copolymer is described in Ex 2.

According to US 4,448,956 the product composition may be made by mixing the molten lactam, the initiator and the lactamate catalyst and charging to a mould.

EP 301663A describes a 4 component impact resistant resin composition comprising 30-70% of a specified polyamide, 5-40% of a polyarylate, 5-40% of an adduct of an unsaturated dicarboxylic acid anhydride and a butadiene copolymer with at least one monomer selected from the group of aromatic vinyl monomers, unsaturated nitrile monomer and acrylate monomers and a 3-30% of a specified epoxy group containing olefin copolymer. The polyarylate is obtained from a bis phenol and terephthalic or isophthalic acid or a functional derivative thereof or halogen or alkyl substituted derivative.

GB 2208868A describes a composition comprising a polyamide resin and a rubber component dispersed therein as cross linked particles of nitrile and acrylic rubber. The nitrile rubber may be a hydrogenated butadiene acrylonitrile rubber free radical grafted with a solution of maleic anhydride at 95°C.

One problem with some known impact modifiers for polyamides is their loss of effectiveness at low temperatures. Graft polymers have now been found which retain at least a significant part of their effectiveness at low temperature and especially retain substantially all of their effectiveness.

The present invention provides a graft polymer comprising a nitrile rubber having up to 50% by weight of maleic anhydride grafted thereon, and obtainable by melt grafting.

The present invention also provides a polymer composition comprising a first component (a) which is a polyamide and a second component (b) which is a rubber characterized in that second component (b) comprises at least one graft polymer comprising a nitrile rubber having up to 50% by weight of maleic anhydride grafted thereon (especially obtainable by melt grafting and/or from a nitrile rubber solid at 25°C), component (b) being present in said composition at up to 50% by weight. The present invention also provides a method for making a solid polymer composition, which method comprising mixing together a polyamide and said graft rubber, the latter being present in the composition at up to 50% by weight.

The polyamide may comprise a polylactam or a reaction product of an organic diamine and an organic dicarboxylic acid or derivative thereof, especially an alkylene diamine eg of 4-12 and an alkylene dicarboxylic acid eg of 4-14 carbon atoms or an aromatic diamine carbon atoms and an aromatic dicarboxylic acid. The polyamide may be amino or carboxyl terminated. Examples of suitable polyamides are nylon polymers, for example Nylon 6 ; Nylon 6,6 ; Nylon 11 ; Nylon 12 ; or Nylon 6,10 or an amorphous polyamide for example that sold under the (Trade Name) Trogamid T. A blend of polyamides may be used. The polyamide may have a melting point of 210-270°C eg 210-230°C or 230-260°C. The Specific Gravity of the polyamide is usually 1.05-1.20 eg 1.1-1.15. The polyamide may be of extrusion grade with low viscosity and m.p. or moulding grade of high viscosity and high m.p.

The second component may comprise a blend of graft polymers. The nitrile rubber to be grafted is usually solid at 25°C. The graft polymer may be prepared by melt grafting with maleic anhydride onto nitrile rubber especially in the presence of a free radical initiator. Suitable nitrile rubbers comprise acrylonitrile-butadiene copolymers with acrylonitrile content of up to 60% by weight, preferably about 20% to 50%, more preferably about 25% to 40% and most preferably about 28% to 38% ; they preferably consist essentially of acrylonitrile and butadiene or hydrogenated butadiene units. The nitrile rubber usually has a Specific Gravity of 0.95-1.05 and may have a Mooney viscosity $M_{L \ 1+4}$ (100°C) of 10-80 especially 20-40. The acrylonitrile-butadiene copolymers may be prepared by low temperature free radical emulsion polymerisation and, before grafting may be hydrogenated to give hydrogenated acrylonitrile butadiene nitrile rubbers ; preferably the nitrile rubber is unhydrogenated acrylonitrile butadiene copolymer. Suitable free radical initiators for the maleic anhydride grafting onto the nitrile rubber are organic peroxides such as di arylperoxides, monoaliphatic mono aryl peroxides, bis (aliphatic peroxy) aromatic compounds, peroxydicarbonates for example 1,4 bis(tert.butylperoxy) isopropyl benzene, 2,5 dimethyl 2,5 bis(tert.butylperoxy) hexane dicumyl peroxide and bis (4-tert.butylcyclohexyl) peroxydicarbonate); and azo compounds such as azo bis- isobutyronitrile. Weight ratios of peroxide to maleic anhydride in the graft polymerisation are usually 1 :1-2000 especially 1 :40-1500 and weight ratios of active oxygen from the peroxide compound to maleic anhydride are usually 1 :20-30,000 preferably 1 :500-25,000 eg 1 :2,000-20,000.

The amount of maleic anhydride added to the nitrile rubber is up to 50% by weight of the rubber eg up to 30% or up to 10% eg 0.1-50% such as 5-30% especially 7-15%. The amount of maleic anhydride grafted is up to 50% eg up to 30% or up to 10% such as 10-30%, but preferably the graft level (as defined below) is 1-60% such as 2-15% or 2-10%, but especially 10-45% such as 10-30%, 15-30% or 20-30% ; graft levels of 1.3-24.6% eg 2.5-9.5% or 12.8-24.6% may be used. The term "graft level" as used herein is defined by the expression.

$$\text{Graft Level} = \frac{I_a}{I_n} \times \frac{Y}{36} \times 100$$

wherein $I_a$ is the area of the anhydride band measured around 1777-1783 especially 1781-83 cm⁻¹ in the Infra Red region, $I_N$ is the area of the nitrile C≡N stretching signal at 2236 cm⁻¹ in the Infra Red region, and Y is the percentage of acrylonitrile units in the nitrile rubber. Thus for a 36% acrylonitrile butadiene rubber the graft level is the ratio of the anhydride to the nitrile band areas expressed as a percentage.

The maleic anhydride and nitrile rubber may be heated together for sufficient time to effect the required degree of grafting depending on such factors as the nitrile rubber used and the amount and type of initiator used (if any), Graft temperatures of 40-250°C especially 110-250% such as 40-120° with aliphatic peroxide and aliphatic peroxydicarbonate initiators and 120 - 220°C with diaryl peroxide initiators are preferred. Graft times of 1 min to 1 hour may be used. The graft reaction may be performed in a mixer eg a batch mixer such as a Banbury mixer or an extruder such as single or twin screw extruder, particular in an inert atmosphere such as under nitrogen. After the grafting, the crude graft product may be mixed directly with the polyamide or the crude graft product may be first purified to remove unreacted maleic anhydride eg by evaporation under vacuum such as at 60-120°C for 5 min to 16 hr ; during this vacuum drying stage eg at 100°C for 12 hour, the grafting may continue.

In addition to the grafting of the nitrile rubber, there may also be some gelling of the rubber. Usually the gel content of the graft rubber, which relates to the degree of cross linking and is as defined below, is 0.3-60% or 1-50% such as 1-30% or 2-10% but preferably 15-50% or especially 15-30% ; gel contents of 0.4 -25.1% eg 2.5-8.6% or 13.66-48.26 or especially 13.66-25.1% may be used. Preferably the numerical value of the percentage graft level is higher than the numerical value of the gel content. The gel content of the graft nitrile rubber as used herein is defined by the percentage of material of the rubber from small pieces which is insoluble after 24 hrs in refluxing preboiled chloroform (to ensure exclusion of dissolved oxygen). Samples of the grafted rubber are cut into small pieces about 5mm x 5 mm x 5mm, weighed and put in 100 μm mesh pouches. These pouches were placed in the pre-boiled chloroform for 24 hours. After extraction was complete, the samples were vacuum dried overnight at 120°C to remove any traces of solvent. The samples were then reweighed and the remaining insoluble material recorded as the gel content (unprocessed NBR has an extremely low gel content of 0.2% wt). This gel content test was a standard cable testing method designed for systems containing network gels.

The graft rubber usually has maleic anhydride monomer units randomly grafted on the rubber backbone.

Preferred graft rubbers have graft levels of 2-10% and gel contents of 1-10%, but especially graft levels of 20-30% and gel contents of 15-50% or 15-30%, as these rubbers, especially the latter can give blends with the polyamide having excellent low temperature impact energy.

The graft rubber is mixed with preformed polyamide in a weight percentage of up to 50% eg 0.1-50% such as 5-30% especially 5-15%, based on the total weight of graft rubber and polyamide. The polymer composition obtained from components (a) and (b) is usually in the absence of polyester eg polyarylate and epoxy olefins and thus is usually, substantially free of compounds eg epoxy compounds other than the rubber capable in the melt of reacting with the terminal groups of the polyamide ie amino and/or carboxyl groups. The polymer composition is also preferably substantially free of rubber particles substantially completely vulcanized or cross linked and in particular usually was made in the absence of any vulcanization agent present capable of cross linking said nitrile rubber to itself or to acrylic rubber to form said particles. The solid polymeric components of the polymer composition preferably consist essentially of components (a) and (b).

The method of mixing components (a) and (b) is performed at a temperature sufficiently elevated to melt but not decompose the components of the composition. Typically, temperatures at up to 300°C eg 220-250°C may be used. The degree of mixing is controlled for good dispersion whilst limiting the amount of shear experienced by the components to limit the possibility of inducing crosslinking and degradation which may occur under conditions of high shear. A twin screw extruder may be used in the method of the present invention. The components may be premixed below their melt temperature for example in a tumble mixer.

The components are preferably vacuum dried before use for example, at 100°C for 12 hours.

The polymer composition of the invention contains the graft rubber distributed in the polyamide, usually in the form of a macroscopically homogeneous blend, and is substantially free of solid cross linked rubber particles ; microscopically the polymer composition has a rubber phase dispersed in a polyamide matrix. The rubber phase is usually of lightly gelled polymer eg of average size less than 5-10 microns rather than substantially completely crosslinked polymer.

The polymer composition according to the present invention may also comprise one or more conventional additives for example stabilizers and inhibitors of oxidative, thermal and ultraviolet light degradation, lubricants and mould release agents, colourants, flame-retardents, fibrous fillers eg glass and particulate fillers and reinforcements, nucleators plasticizers and the like.

Polymer compositions made according to the present invention can have good resistance to hydrocarbon oils and greases, and good performance at extremes of temperature, for example maintain impact properties at low temperatures such as ones not greater than 0°C such as -30° to -10°C. The polymer composition may be used in applications requiring oil, fuel grease and water resistance especially over a wide range of ambient and low temperatures, for example oil seals, petrol or gasoline hoses, printer rollers and various automotive applications. The polymer composition of components (a) and (b) may be converted into shaped objects such as those described above by moulding or injection techniques usually involving melting and shaping at up to 300°C eg 230-280°C depending on the mp of the polyamide.

The invention will now be illustrated in the following Examples in which a nitrile rubber is grafted under various conditions and grafted rubber is mixed with a polyamide.

Materials

Grafting experiments were carried out using a Breon grade of nitrile rubber (N36C35) supplied by BP Chemicals, Barry. Breon N36C35 rubber is a low temperature, free radical emulsion polymerised acrylonitrile-butadiene copolymer with medium acrylonitrile content of 36%, a Specific Gravity of 0.98 and a Mooney viscosity $M_{L\ 1+4}$ (100°C) of 35 The copolymer is solid at 25°C, it is hereinafter referred to as the NBR (nitrile butadiene rubber).

The polyamide used throughout was a low viscosity extrusion grade of Beetle Nylon 6, grade LO1, supplied by British Industrial Plastics BIP Limited (herein referred to as PA6). The PA 6 had mp 221°C and Specific Gravity of 1.13. A commercial impact modifier Exxelor VA1801, a maleic anhydride grafted ethylene-propylene rubber supplied by Exxon Chemicals Limited, was used for some comparison experiments. Two organic peroxides were used as free radical initiators, namely, Perkadox 16 (Bis (4-t-butylcyclohexyl) peroxydicarbonate) and dicumyl peroxide herein referred to as (DCP) (both supplied by Akzo Chemie). Granular maleic anhydride (herein referred to as MAH), supplied by Fisons, was used in each case.

Examples 1-12 and Comp Ex A-C

Preparation of Graft Polymers

Graft polymers were prepared using a Brabender Plasticorder mixer with a chamber capacity of 40g. The Brabender mixer was fitted with standard 'roller' mixing blades used for general thermoplastics processing and was placed in a fume cupboard. Perkadox 16 peroxide was used as initiator to prepare graft polymers at 100°C and DCP was used at 180°C. The NBR was added to the mixing chamber in small amounts and given 1 minute at rotor speed of 60 rpm to allow the formation of a homogeneous "melt". MAH and the peroxide were then simultaneously added in variable amounts to the chamber and a further 5 minutes mixing was carried out. The total quantity of NBR charged to the mixer was 38 grammes. Exact loadings further mixers were determined on the basis of the material density using the following relationshp.
Loading (g) = 45 x [Density of NBR at Room Temperature (gcm$^{-3}$)].

Details of the polymer preparations and the properties of the polymers obtained are given in Table 1 below, together with comparison with the properties of commercially available impact modifier Exxelor VA 1801 unpurified in Ex G and purified by removal of free MAH by vacuum drying for 12 hours at 100°C (Ex H). In Ex A, 1-5, 9 and 10, the set processing temperature was 100°C and the peroxide (if any) Perkadox 16, while in Ex 6-8, 11, 12, B and C the processing temperature was 180°C and the peroxide (if any) DCP. The active oxygen content in the Table is a measure of a peroxide's radical forming ability ie peroxide activity.

Graft Level Analysis

Graft analysis was performed using a Nicolet 740 Fourier Transform Infra Red Spectrometer (FTIR) at 4cm$^{-1}$ resolution on samples which had been vacuum dried at 100°C for 12 hours, in order to remove any free MAH, and subsequently pressed into thin films (at 150°C for 3 minutes) of known thickness (t cm).

Relative graft levels were determined by measurement of the area of the anhydride band (I) at around 1777-1783 or 1781-1783 cm$^{-1}$ divided by the area of the nitrile $C \equiv N$ stretching signal at 2236cm$^{-1}$. The latter signal area is related to the thickness for a particular nitrile copolymer, so the quoted graft level is a measure of the area of the anhydride band I to the thickness t ie the I/t ratio.

In each case the true base line under the anhydride band was not known and the band was measured by dropping perpendiculars from the absorbance minima to the base line flattened between 2000 and 1500 cm$^{-1}$.

Determination of Gel Content

The gel content was determined as described above.

Examples 13, 14

The processes of Examples 3 and 6 were each repeated six times and the graft copolymers obtained in each set of 6 operations were combined to give 2 bulk products, one (Ex 13) a bulk product with low graft level and gel content and the other (Ex 14) a bulk product with high graft level and gel content. The properties of the graft polymers are given in Tables 2-4.

Examples 15,16 and Comparative Ex D-F

Preparation of PA6/Rubber Polymer Compositions

The bulk maleic anhydride grafted polymers (hereinafter referred to as MAH-g-NBR) of Ex 13 and 14 were chosen for blending with PA6 polyamide. Exxelor VA1801 modifier and unmodified NBR were also blended with PA6 in comparative experiments not according to the present invention. Rubber components were added to the PA6 polyamide at 10% by weight level in all cases based on the total weight of rubber component and polyamide).

The bulk grafted rubbers were cut into small pieces in preparation for addition to PA6 and with the exception of unmodified NBR, all materials were vacuum dried overnight at 100°C in order to remove moisture from the PA6 and any remaining free MAH from the grafted rubbers. Samples of Ex 13 and Ex 14 were taken before and after this vacuum drying process and analysed for free maleic anhydride. Tables 2 and 3 show the effect on graft level and gel content for this drying step additional to the normal 12 hours at 100°C which forms part of the standard graft analysis procedure. Table 4 shows the free maleic anhydride content of the graft rubber before any vacuum drying and after the first 100°C drying step. The results on graft level shown in Table 2 (before Second Vac drying) indicate the properties of the graft polymers as they were added to the Nylon 6 for the polymer composition preparation. Details of the key peaks in the Fourier Transform Infra Red Spectrum of the graft products of Ex 13 before and after the second vacuum drying, and of Ex 14 before the second vacuum drying and Exxelor VA1801 (after vacuum drying for 12 hours at 100°C) are shown in Table 7. It is believed that further grafting occurs during the vacuum drying stage. The levels of MAH detected in ungrafted NBR shown in Table 4 are believed to be due to experimental inaccuracy as a result of using very small samples for analysis.

PA6 was pre-mixed with the rubber fractions in a tumble mixer for 90 minutes prior to blending. This appeared to give very satisfactory mixing with the rubber well distributed throughout the PA6. A11 blends were produced on a Leistritz LS30 :34, 34mm counter-rotating twin screw extruder, using a screw speed of 60 rpm. The extruder has a length/diameter ratio (L/D) of 20 :1 and is fitted with a vent port for removal of volatiles/moisture from the melt. The screw profile used was carefully chosen to ensure good mixing of the components while simultaneously controlling the amount of shear experienced by the materials. In this way, it was considered possible to produce good dispersion of the rubber phase in the PA6 matrix and limit the possibility of inducing any crosslinking and degradation. The screw configuration featured a long feed zone with wide, deep channels followed by a short compression zone the latter as is normal for polyamide processing. A pair of shear rings and a short pitch metering section were used to complete the profile.

A 2 x 5mm diameter strand die and a temperature profile of 190°C, 230°C, 230°C, 230°C, 230°C, 235°C, 240°C (240°C at die head) were used throughout blend production. In addition, premixed material was fed to the extruder by hand at about 5kg hr$^{-1}$. Upon extrusion from the die, the blended materials were collected by hand in strand form. The resulting strand was then pelletised by hand using a strand cutter and any small lumps were ground using a laboratory grinder with 10mm size mesh. The rough pellets produced were then sieved using a 5mm grid sieve and any remaining large pellets were re-ground. This process provided blended materials in pellet form, of approximately 8-125mm$^3$ suitable for injection moulding.

The polyamide/rubber polymer compositions were in the form of a macroscopically homogeneous blend, with a polyamide matrix containing a dispersed rubber phase of lightly gelled rubber.

## Physical Test Specimen Production

All blends together with unmodified PA6 were vacuum dried overnight at 100°C prior to moulding. Charpy impact and tensile specimens were produced using a Battenfield BA230 injection moulder. Tensile specimens were moulded to provide samples suitable for machining of Izod impact specimens. The moulder was fitted with a 5 impression test piece mould capable of producing Charpy, tensile, creep, water absorption and drop impact specimens in any combination. The moulder was also equipped with a vented barrel for removal of moisture and volatiles from process materials.

## Impact Testing

All four blends together with unmodified PA6 were assessed for impact performance according to standard $G_1C$ Charpy and Izod test methods. All specimens (Charpy and Izod bars) were vacuum dried at 80°C for 12 hours prior to testing.

Charpy impact testing (Three point bending test) was carried out using a Universal Pendulum Impact Machine at temperatures of 23°C and -20°C according to procedure BS2782 : Part 3 : Method 359. Fifteen Charpy specimens were tested at each temperature with dimensions 6.7mm x 6.7mm x 55mm and these were noticed using a 30° sharp notch cutter to a range of depths (0.34 mm - 2.7mm) corresponding to a standard series of notch depth to specimen depth ratios. Pendulum (Tup) E with impact velocity of 3.3 ms$^{-1}$ (position 2) and maximum energy range of 0.89 Joules was employed to fracture each specimen ensuring that the energy expended was between 10 and 80% of this maximum value on each occasion. Specimens were tested in the "flatwise" direction wth a distance of 40mm between the specimen supports.

Izod impact testing (Cantilever bending test) was also performed on a Universal Pendulum Impact machine at identical temperatures and impact velocity to Charpy testing, according to procedure BS2782 : Part 3 : Method 350. Six Izod specimens were used at each temperature with dimensions 80mm x 10mm x 4mm and these were notched to a depth of 2mm with notch root radius of 0.25mm. Pendulum G, with maximum energy range of 1.95 Joules, was used throughout. Specimens were clamped vertically (edgewise) and gripped by a vice, at a preset torque, in a position level with the centre of the notch. After testing, Charpy and Izod specimens were measured using a sliding stage optical microscope for notch depth and cross sectional area.

For Charpy results, $G_1C$ (critical strain energy release rate) was calculated in units of $kJm^{-2}$ by computer from a plot of absorbed energy (U) versus BDØ(specimen thickness x specimen width x calibration function) for each specimen using a least squares data fit. Izod impact energies were obtained by direct calculation from values of absorbed energy using the relationship

$$I(\text{impact energy}) = \frac{\text{Absorbed energy (U) in } kJm^{-2}}{\text{Cross sectional area of specimen (BD)}}$$

Charpy and Izod impact testing results are shown in Tables 5 and 6. Izod values shown in Table 6 are averages for the six samples tested.

Both impact tests gave similar trends in impact performance for the material studied. As seen from the Table 5 $G_1C$ Charpy results, at room temperature unmodified Nylon 6 had the lowest impact strength with blends of Nylon 6 + NBR or Nylon 6 + Ex 13 graft polymer exhibiting almost identical but larger impact energies, while blends of Ex 16 (containing Nylon 6 + Ex 14 graft polymer) and comp Ex F (containing Nylon 6 + Exxelor VA1801) gave the highest impact energies at room temperature of all the materials studied with a value which was over 4 times greater than that of unmodified Nylon 6. However when the Charpy test temperature was reduced to -20°C, all materials showed a reduction in impact performance to various extents except the blend Ex 16 (Nylon 6 + Ex 14 graft polymer) where the impact performance was completely retained. Blend Ex 16 outperformed the Exxelor containing blend (Comp Ex F) and was tougher at low temperature. Blends D (Nylon 6 + NBR) and Blend E (Nylon 6 + 10% w/w Exxelor VA1801) exhibited the largest reduction in impact performance at low temperature with 38.1% and 26.9% respectively compared to only a 13.5% reduction for Blend Ex 15.

Charpy results also indicate that all fracture surfaces were brittle and there is evidence on some Charpy plots of the effects of dynamic resonances in the data. Also, some of the injection moulded Charpy test specimens contained small voids.

Izod results as shown in Table 6 indicate identical trends in impact performance to that demonstrated by Charpy testing. Thus while addition of NBR to the polyamide increased the Izod impact energy at room temperature compared to polyamide alone, and grafting of the NBR increased the energy even more, the -20°C results showed complete retention of impact energy for blend Ex 16 and a smaller loss for blend Ex 15 than for comparative blend F with Exxelor additive. Again, all fractures were brittle and each specimen, when fractured, exhibited a deflection of the crack path as it reached a point 1-1.5mm from the back sample edge. This could be due to an inhomogenicity in the specimens which occurs during injection moulding causing a severe skin and core effect. Alternatively, it could be due to dynamic effects deflecting the crack front by an interaction of stress waves with the crack tip. The result of this effect is that the area fractured is greater than that measured, resulting in different absolute impact energy values. However, as this occurred in each specimen the overall trends are not affected. This may be the reason for the differences in percentage reduction in impact performance as test temperature is reduced when comparing Charpy and Izod impact results (Tables 5 and 6).

TABLE 1: RESULTS OF GRAFT POLYMER PREPARATION

| EXAMPLE | MAH % W/W Added | PEROXIDE % W/W | ACTIVE OXYGEN (%) | GEL CONTENT (% wt) | GRAFT LEVEL % | BRABENDER MELT TEMP. |
|---|---|---|---|---|---|---|
| A | 0 | 0 | 0 | 0.5 | – | 140°C |
| 1 | 10 | 0 | 0 | 0.4 | 2.4 | 137°C |
| 2 | 5 | 0.1 | $3.82 \times 10^{-3}$ | 2.6 | 2.5 | 141°C |
| 3 | 10 | 0.1 | $3.82 \times 10^{-3}$ | 2.5 | 4.0 | 139°C |
| 4 | 5 | 0.5 | $1.91 \times 10^{-2}$ | 8.6 | 4.4 | 143°C |
| 5 | 10 | 0.5 | $1.91 \times 10^{-2}$ | 8.4 | 3.9 | 144°C |
| 6 | 10 | 0.01 | $5.92 \times 10^{-4}$ | 23.5 | 24.6 | 210°C |
| 7 | 2 | 0.05 | $2.96 \times 19^{-3}$ | 5.0 | 6.8 | 207°C |
| 8 | 10 | 0.05 | $2.96 \times 10^{-3}$ | 25.1 | 18.3 | 208°C |
| 9 | 10 | 2.0 | $7.64 \times 10^{-2}$ | 20.1 | 9.5 | 146°C |
| 10 | 10 | 5.0 | $1.91 \times 10^{-1}$ | 21.0 | 16.1 | 144°C |
| 11 | 10 | 0 | 0 | 14.0 | 12.8 | 206°C |
| B | 0 | 0 | 0 | 4.4 | – | 211°C |
| C | 0 | 0.01 | $5.92 \times 10^{-4}$ | 6.4 | – | 208°C |
| 12 | 1.0 | 0 | 0 | 5.9 | 1.3 | 205°C |
| G | – | – | – | <1.0 | 25.2 | – |
| H | – | – | – | <1.0 | 21.2 | – |

EP 0 438 286 A1

TABLE 2: GRAFT LEVEL ANALYSIS

| EXAMPLE | GRAFT LEVEL % (BEFORE SECOND VAC DRYING) | GRAFT LEVEL % (AFTER SECOND VAC) DRYING |
|---|---|---|
| 13 | 3.4 | 7.9 |
| 14 | 18.0 | -* |

* Not tested

TABLE 3: GEL CONTENT (% weight)

| EXAMPLE | GEL CONTENT % |
|---|---|
| 13 vac dried | 13.66 |
| 14 vac dried | 48.26 |
| EXXELOR VA 1801 vac dried | 13.70* |
| EXXELOR VA 1801 vac dried | $<1.0^{+}$ |

* Extraction performed using chloroform

+ Extraction performed using xylene - preferred solvent for ethylene based polymers

TABLE 4: MAH ANALYSIS

| EXAMPLE | FREE MAH LEVEL | |
|---|---|---|
| | BEFORE ANY VACUUM DRYING | AFTER 12 HOUR VACUUM DRYING |
| 13 | 8.2% | 0.17% |
| 14 | 5.6% | 0.34% |
| NBR CONTROL | 64 ppm** | 196 ppm** |
| EXXELOR VA1501 | *<500 ppm | - |

\* Literature value

\*\* Experimental errors

TABLE 5: CHARPY IMPACT TEST RESULTS ($G_1C$ VALUES IN $KJm^{-2}$)

| EXAMPLE | SAMPLE | TEST TEMPERATURE | |
|---|---|---|---|
| | | 23°C | -20°C |
| D | NYLON 6 | 2.2 | 1.8 |
| E | NYLON 6 + NBR (10%) | 5.9 | 3.7 |
| 15 | NYLON 6 + Ex 13 polymer (10%) | 5.9 | 5.1 |
| 16 | NYLON 6 + Ex 14 polymer (10%) | 6.8 | 7.7 |
| F | NYLON 6 + EXXELOR VA1801 (10%) | 8.6 | 6.3 |

### TABLE 6: IZOD IMPACT TEST RESULTS (KJm$^{-2}$)

| EXAMPLE | SAMPLE | TEST TEMPERATURE | |
|---|---|---|---|
| | | 23°C | -20°C |
| D | NYLON 6 | 6.2 | 5.5 |
| E | NYLON 6 + NBR (10%) | 12 | 6.6 |
| 15 | NYLON 6 + Ex 13 polymer (10%) | 13 | 9.5 |
| 16 | NYLON 6 + Ex 14 polymer (10%) | 13 | 13 |
| F | NYLON 6 + EXXELOR VA1801 (10%) | 15 | 10 |

### TABLE 7

### MAIN IR PEAKS IN GRAFT RUBBERS BETWEEN 2000 and 1496 cm$^{-1}$

| Example | WAVENUMBER (cm$^{-1}$) |
|---|---|
| 13 before extra vac drying | 1982 wk, 1950 wk, 1911 wk, 1850 med wk, 1779 st, 1735 med st, 1687 st, 1640 med st, 1595 broad med st |
| 13, after extra vac drying | 1984 wk, 1949 wk, 1925 wk, 1849 med wk, 1779 med st, 1732 st, shoulder about 1705 med 1655 broad, med st, 1564 med, 1515 med wk |
| 14 before extra vac drying | 1861 wk, 1782 v st, 1740 st, 1708 med, 1688 med st, 1668 st 1642 st, 1604 wk |
| H Exxelor | 1865 Med 1789 v st, 1711 Med |

wk, med wk, med, med st, st and v st means the intensity of the peak was weak, medium weak, medium, medium strong, strong or very strong respectively, the intensity increasing in the order given.

## Claims

1. A graft rubber characterised in that it comprises at least one nitrile rubber having up to 50% by weight of maleic anhydride grafted thereon, and obtainable by melt grafting.

2. A rubber according to claim 1 characterised in that said nitrile rubber is an acrylonitrile butadiene rubber.

3. A rubber according to claim 2 characterised in that it is a free radical melt grafted acrylonitrile butadiene rubber.

4. A rubber according to any one of the preceding claims characterised in that the nitrile rubber before grafting is solid at 25°C.

5. A rubber according to any one of the preceding claims characterised in that it has a gel content of 1-30%.

6. A rubber according to claim 5 characterised in that the gel content is 15-30%.

7. A rubber according to any of the preceding claims characterised in that it has a graft level of 0.5-60%

8. A rubber according to claim 7 characterised in that the graft level is 10-30%.

9. A method for making a solid polymer composition, said method comprising mixing together at elevated temperature a polyamide and a graft nitrile rubber as claimed in one of the preceding claims said rubber being in amount of up to 50% by weight.

10. A polymer composition comprising a first component (a), which is a polyamide and a second component (b) which is a rubber characterised in that second component (b) comprises at least one graft polymer comprising a nitrile rubber having up to 50% by weight of maleic anhydride grafted thereon, and obtainable by melt grafting, component (b) being present in said composition at up to 50% by weight.

11. A polymer composition comprising a first component (a), which is a polyamide and a second component (b) which is a rubber characterised in that second component (b) comprises at least one graft polymer comprising a nitrile rubber having up to 50% by weight of maleic anhydride grafted thereon, component (b) being present in said composition at up to 50% by weight.

12. A composition according to claim 10 or 11 characterised in that said nitrile rubber before grafting is solid at 25°C.

13. A composition according to any one of claims 10-12 characterised in that the weight percentage of component (b) is 5-30%.

14. A composition according to any one of claims 10 to 13 characterised in that the graft polymer is as claimed in any one of claims 2-8.

## EUROPEAN SEARCH REPORT

European Patent Office

Application Number

EP 91 30 0314

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 095 954 (UNITED STATES RUBBER CO.)<br>* "Résumé"; page 1, lines 7-13; page 5, left-hand column, lines 46-48; examples 6-10 * | 1-8 | C 08 C 19/28<br>C 08 L 77/00 //<br>(C 08 L 77/00<br>C 08 L 13:00 ) |
| X,D | EP-A-0 301 663 (STAMICARBON)<br>* Claim 1; page 5, lines 3,27-34 * | 1-14 | |
| A | FR-A-2 359 179 (BAYER)<br>* Claim 1 * | 9-14 | |
| A,D | US-A-4 803 247 (C.E. ALTMAN et al.)<br>* Claim 1 * | 9-14 | |
| | | | **TECHNICAL FIELDS SEARCHED (Int. Cl.5)**<br><br>C 08 C<br>C 08 L |

The present search report has been drawn up for all claims

| Place of search | Date of completion of the search | Examiner |
|---|---|---|
| THE HAGUE | 15-04-1991 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)